# EUROPÄISCHE PATENTSCHRIFT

(11) **EP 1 083 360 B1**
(45) Veröffentlichungstag und Bekanntmachung des Hinweises auf die Patenterteilung: **18.10.2006**
(21) Anmeldenummer: 00118299.7
(22) Anmeldetag: 06.09.2000
(51) Int. Cl.: F16D 66/00, B60T 8/00, B60T 17/22

(54) **Vorrichtung und Verfahren zum Bestimmen der Temperatur eines an einem Fahrzeug vorgesehenem Bremselements**
Device and method for determining the temperature of a brake element provided on a vehicle
Dispositif et procédé pour déterminer la température d'un élément de frein monté sur un véhicule

(30) Priorität: 10.09.1999 DE 19943352
(43) Veröffentlichungstag der Anmeldung: 14.03.2001
(73) Patentinhaber: KNORR-BREMSE Systeme für Schienenfahrzeuge GmbH, 80809 München (DE)
(72) Erfinder: Peters, Martin, 59394 Nordkirchen (DE); Kleemann, Ulrich, Dr., 81247 München (DE)

(56) Entgegenhaltungen:
- EP-A- 0 594 113
- WO-A-92/00212
- WO-A-99/08018
- DE-A- 4 316 993
- DE-A- 4 418 768
- DE-A- 19 528 553
- US-A- 5 803 211

## Beschreibung

Die Erfindung betrifft eine Vorrichtung und ein Verfahren zum Bestimmen oder zum Vorhersagen der Temperatur eines an einem Rad eines Fahrzeugs oder an einem Fahrzeug vorgesehen Bremselements.

An Rädern, die zum Tragen oder zum Antreiben eines Fahrzeugs vorgesehen sind, werden häufig Bremselemente wie Bremsscheiben vorgesehen, die durch weitere Bremselemente am Fahrzeug wie beispielsweise durch Bremsbeläge abbremsbar sind. Zum Abbremsen wird dabei das Bremselement am Fahrzeug durch eine Betätigungseinrichtung mit dem Bremselement am Rad in einen Reibkontakt gebracht. Durch die Reibung zwischen dem Bremselement am Rad und dem Bremselement am Fahrzeug wird die Drehung des Rads gegenüber dem Fahrzeug behindert, wodurch sich eine Abbremsung des Fahrzeugs gegenüber einer Fahrbahn ergibt, auf der das Rad rollt. Durch die Reibung werden die Bremselemente erhitzt und ab bestimmten Temperaturen ergeben sich Probleme. Wenn das am Rad vorgesehene Bremselement durch eine Bremsscheibe gebildet ist, ist dabei problematisch, daß deren Oberfläche beim Erreichen von hohen Temperaturen beschädigt wird. Bremsbeläge, die mit der Bremsscheibe zusammenwirken, beginnen ab dem Erreichen einer Temperaturobergrenze zu stinken und zu qualmen. Bei Klotzbremsen können durch die hohen Temperaturen Radschäden entstehen. Dies ist bei U-Bahnen besonders problematisch, da der dabei entstehende Qualm und der Gestank die Fahrgäste belästigt und verängstigt. Bei U-Bahnen und bei anderen Fahrzeugen sind mechanische Bremsen, bei denen eine pneumatische Betätigungseinrichtung vorgesehen ist, unverzichtbar, da bei einem Ausfall einer vorgesehenen elektrodynamischen Bremse das Fahrzeuge trotzdem zuverlässig abbremsbar sein muß.

Zur Überwachung der Bremse wird in der DE 42 35 364 erwogen, in der Bremse in unmittelbarer Nähe der Bremsscheibe einen Temperatursensor anzuordnen und dessen Ausgangssignal dem Fahrer des Fahrzeugs anzuzeigen. Bei einem solchen Temperatursensor erhöhen sich die Herstellungskosten der Bremse und deren Störanfälligkeit.

Die DE 43 16 993 beschreibt ein Verfahren und eine Vorrichtung zum Bestimmen des Zustandes einer Fahrzeugbremsanlage, wobei die Bremsbelagrestdicke und/oder die Bremsscheibentemperatur indirekt ohne Sensoren an der Bremse ermittelt werden, indem eine Anzahl, die Bestimmung verschiedener Fahrzeugenergien erlaubender Sensoren, entsprechende Signale an einen Rechner liefert, der daraus die gewünschten Daten errechnet.

Die DE 195 28 553 beschreibt ein Temperatur-Annahmegerät für einen Bremsklotz, bei dem ebenfalls die Temperatur ohne Sensor an der Bremse durch einen Rechner ermittelt wird, der aufgrund von Bremsvorgängen Temperaturanstieg bzw. Temperaturabfall berechnet.

Weiterhin wird in der DE 42 35 364 A1 vorgeschlagen, bei der Inbetriebnahme des Fahrzeugs einen momentanen Temperaturwert als Anfangswert einzustellen, wobei während des Auftretens eines Impulses, der eine Betätigung der Bremse anzeigt, ein den momentanen Belastungszustand der Bremse repräsentierendes Lastsignal erfaßt wird, das die Fahrzeuggeschwindigkeit mit der Anpressskraft an die Bremsscheibe verknüpft. Hieraus wird die resultierende Temperaturerhöhung der Bremsscheibe ermittelt und der momentane Temperaturwert entsprechend der Temperaturerhöhung erhöht. Während derjenigen Zeitdauer, während der kein Bremssignal-Impuls auftritt, wird die von der Scheibenbremse abgeführte Wärmemenge berechnet, hieraus die resultierende Temperaturerniedrigung der Scheibenbremse ermittelt und der momentane Temperaturwert entsprechend dieser Temperaturerniedrigung verringert. In der Praxis hat sich herausgestellt, daß mit diesem Verfahren die Temperatur der Bremsscheibe noch nicht ausreichend genau bestimmbar ist.

Es ist daher Aufgabe der Erfindung, eine Vorrichtung und ein Verfahren zum Bestimmen bzw. Vorhersagen der Temperatur eines Bremselements an einem Fahrzeug bereitzustellen, das eine genaue und zuverlässige Bestimmung der Temperatur eines Bremselements an einem Fahrzeug erlaubt.

Diese Aufgabe wird gemäß der Erfindung durch den Gegenstand der unabhängigen Ansprüche gelöst. Vorteilhafte Weiterbildungen ergeben sich aus den jeweiligen Unteransprüchen.

Die erfindungsgemäße Vorrichtung weist wenigstens einen Radsensor auf, mit dessen Hilfe eine momentane Winkelstellung des Rads des Fahrzeugs bestimmbar ist. Ein solcher Radsensor kann auch als Beschleunigungssensor ausgeführt sein, der die Winkelbeschleunigung des Rads mißt, wobei dann die Winkelgeschwindigkeit und die momentane Winkelstellung des Rads durch ein Integrationsverfahren über der Zeit bestimmt wird. Außerdem ist wenigstens ein Gewichtssensor zur Bestimmung der Gewichtskraft der Zuladung des Fahrzeugs vorgesehen. Es kann auch ein Sensor zur Bestimmung des Gesamtgewichts des Fahrzeugs vorgesehen sein, wenn das Gewicht des Fahrzeugs nicht bekannt ist. Bei bekanntem Fahrzeuggewicht kann der Sensor entfallen. Weiterhin ist eine Zeitbasiseinrichtung zur Erzeugung von Zeitinformationen sowie ein Betätigungssensor zur Bestimmung des Zustands der Betätigungseinrichtung vorgesehen. Die vorstehend aufgeführten Merkmale sind häufig bereits in der Grundausstattung von Fahrzeugen vorhanden, so daß keine zusätzlichen Sensoren notwendig sind.

Die Verarbeitungsvorrichtung ist weiterhin so ausgebildet, daß die vom ersten Bremselement und/oder vom zweiten Bremselement aufgrund von Wärmestrahlung, Wärmeleitung und/oder Konvektion abgegebene Wärmeenergie bestimmbar ist. Gerade Bremsscheiben geben Wärmeenergie über Konvektion an die sie umgebende Umgebungsluft ab. Dabei können Wärmeübergänge durch freie und/oder erzwungene Strömungen auf der Bremsbackenseite und auf der Kühlkanalfläche im Inneren der Bremsscheibe berücksichtigt werden. Außerdem kann ein Wärmeübergang durch Strahlung auf der Bremsbackenseite und der Kühlflächenseite erfolgen. Zur Berechnung dieser Kühlwirkungen werden gemäß der Erfindung Wärmeübergangszahlen der Bremsscheibe zur Verfügung gestellt. Diese Werte werden gegebenenfalls in Abhängigkeit der momentanen Geschwindigkeit des Fahrzeugs und der aktuellen Temperatur rechnerisch in der Verarbeitungsvorrichtung ermittelt.

Die Verarbeitungsvorrichtung ist weiterhin so ausgebildet, dass sie aus der aktuellen Temperatur des ersten Bremselements eine maximal zulässige Geschwindigkeit ermittelt, aus der das Fahrzeug bis zum Stillstand abgebremst werden kann, ohne eine vorgegebene Maximaltemperatur des ersten Bremselements zu überschreiten, und wobei die Maximalgeschwindigkeit an einen Fahrer des Fahrzeugs ausgebbar ist.

Die erfindungsgemäße Verarbeitungsvorrichtung verarbeitet die Signale des Radsensors, des Gewichtsensors, der Zeitbasiseinrichtung und des Betätigungssensors, wobei zusätzlich eine Anzeigeeinheit vorgesehen ist, mit der das Ergebnis einer durch die Verarbeitungsvorrichtung durchgeführten Verarbeitung an einen Nutzer des Fahrzeugs ausgebbar ist. Abweichend davon kann das Ergebnis der Verarbeitung auch dazu verwendet werden, das Fahrzeug an einer Weiterbewegung vollständig zu hindern bzw. eine Weiterbewegung zu gestatten. Dabei wird gemäß der Erfindung zu wenigstens einem Bestimmungszeitpunkt ein Wert für die Änderung der Temperatur des ersten Bremselements und/oder für die Änderung der Temperatur des zweiten Bremselements gegenüber einem vorhergehenden Bestimmungszeitpunkt erzeugt, in dem die dem ersten Bremselement und/oder dem zweiten Bremselement zugeführte Energie bestimmt wird. Hierzu wird die momentane kinetische Energie des Fahrzeugs berechnet und mit wenigstens einem in der Verarbeitungsvorrichtung gespeicherten Wert der kinetischen Energie des Fahrzeugs zu einem dem Bestimmungszeitpunkt vorgehenden Zeitpunkt verglichen. In der einfachsten Ausbildung der erfindungsgemäßen Vorrichtung wird dabei angenommen, daß bei dem Abtasten einer Verminderung der kinetischen Energie des Fahrzeugs der der Verminderung entsprechende Energiebetrag als Wärmeenergie dem ersten Bremselement und/oder dem zweiten Bremselement zugeführt worden ist, wenn sich gleichzeitig die Zuladung des Fahrzeugs nicht vermindert hat und wenn eine Betätigung der Betätigungseinrichtung für das erste Bremselement und/oder das zweite Bremselement abgetastet worden ist. Dabei kann auch angenommen werden, daß nur ein Teil des für die Verminderung der kinetischen Energie des Fahrzeugs maßgebliche Energiebetrag als Wärmeenergie in das erste Bremselement und/oder in das zweite Bremselement geflossen ist. Hierzu ist es möglich, Eichungen durchzuführen, die den Einfluß von Luftwiderstand und Fahrwiderstand auf das Fahrzeug berücksichtigen. Eine solche Vorgehensweise bewährt sich besonders für den Betrieb von Fahrzeugen auf ebener Strecke. Wenn die Bahn noch durch eine weitere Bremseinrichtung, wie z.B. einer E-Bremse oder einer Schienenbremse, abgebremst wird, kann gemäß der Erfindung diese Bremsleistung bzw. Bremsarbeit entsprechend berücksichtigt werden.

In Weiterbildung der Erfindung ist wenigstens ein Temperatursensor zu Bestimmung der Ausgangstemperatur des ersten Bremselements und/oder des zweiten Bremselements vorgesehen, und zwar vorzugsweise zum Zeitpunkt der Inbetriebnahme des Fahrzeugs. Die Verarbeitungsvorrichtung ist dabei weiterhin so ausgebildet, daß ausgehend von der Ausgangstemperatur direkt oder indirekt zu wenigstens einem Bestimmungszeitpunkt der Wert für die momentane Temperatur des ersten Bremselements und/oder des zweiten Bremselements bestimmbar ist. Dabei ergibt sich die momentane Temperatur des ersten Bremselements und/oder des zweiten Bremselements aus der Summe einer Temperaturänderung, die der dem betreffenden Bremselement zugeführten Wärmeenergie entspricht, und der Temperatur zu einem vorgehenden Bestimmungszeitpunkt bzw. der Ausgangstemperatur.

Um den Rechenzeitbedarf zu verringern, ist es denkbar, die Wärmeübergangswerte nicht ständig online zu berechnen. In diesem Fall ist es vorgesehen, die Wärmeübergangszahlen im voraus zu berechnen und in Form einer Matrix in dem Bremssteuergerät bzw. BSG abzulegen. Das Modell kann dann die entsprechenden Werte direkt aus dem Speicher des BSG lesen und verringert so den Rechenaufwand im BSG.

Der Betätigungssensor zur Bestimmung des Zustandes der Betätigungseinrichtung kann so ausgebildet sein, daß die durch das zweite Bremselement auf das erste Bremselement ausgeübte Kraft und damit die Reibungskraft, die das Rad gegenüber dem Fahrzeug abbremst, bestimmbar ist. Dadurch lassen sich zusätzliche Informationen über die dem ersten Bremselement und/oder dem zweiten Bremselement zugeführte Energie beim Abbremsen des Fahrzeugs gewinnen, mit denen die über die Veränderung der kinetischen Energie des Fahrzeugs ermittelte, dem ersten Bremselement und/oder dem zweiten Bremselement zugeführte Energie vergleichbar sind. Durch Verwendung von zwei oder mehr Informationen über die dem ersten Bremselement und/oder dem zweiten Bremselement zugeführte Wärmeenergie ergibt sich eine genauere Vorhersage der sich daraus einstellenden Temperatur. Gemäß der Erfindung kann beispielsweise aus dem Energiebetrag, der sich aus der Verminderung der kinetischen Energie des Fahrzeugs ergibt, und aus dem Energiebetrag, der sich aus der Auswertung der durch das zweite Bremselement auf das erste Bremselement ausgeübten Kraft bestimmt, ein Mittelwert gebildet werden.

Für den Fall, daß das Fahrzeug auf einer bergigen Strecke bewegt werden soll, läßt sich eine besonders genaue Vorhersage bzw. Bestimmung der Temperatur des ersten Bremselements und/oder des zweiten Bremselements erreichen, wenn zusätzlich ein Höhensensor zur Bestimmung der potentiellen Energie des Fahrzeugs vorgesehen ist, wobei die vom Höhensensor abgegebenen Signale von der Verarbeitungsvorrichtung verarbeitbar sind. Die Verarbeitungsvorrichtung kann dabei auch so ausgebildet sein, daß die potentielle Energie des Fahrzeugs zu einem Bestimmungszeitpunkt unter Verwendung eines in der Verarbeitungsvorrichtung abgespeicherten Höhenprofils einer vorgegebenen Fahrstrecke des Fahrzeugs und/oder der Fahrzeugposition in Abhängigkeit der Signale des Radsensors bestimmbar ist. Eine solche erfindungsgemäße Vorrichtung ist besonders einfach aufgebaut und läßt sich gerade für Fahrzeuge vorteilhaft verwenden, die ständig auf denselben Fahrstrecken betrieben werden. Solche Fahrstrecken haben ein genau vorherbestimmbares Höhenprofil, wobei in Abhängigkeit der Signale des Radsensors des Fahrzeugs einfach bestimmt werden kann, in welchem Streckenabschnitt sich das Fahrzeug befindet. Dadurch läßt sich ein genauer Rückschluß auf dessen momentane potentielle Energie ziehen.

Weiterhin kann ein Sensor zur Bestimmung der aufgrund des Fahrwiderstandes dem Fahrzeug entzogenen kinetischen Energie vorgesehen sein. Der Fahrwiderstand ergibt sich dabei vorwiegend aus der Reibung des Rads des Fahrzeugs gegenüber dem Fahrzeug und der Fahrbahn sowie aus dem Luftwiderstand des Fahrzeugs, wenn es sich mit einer bestimmten Geschwindigkeit bewegt. Die Verarbeitungsvorrichtung kann zur Bestimmung des Fahrwiderstandes vorteilhafterweise so ausgebildet sein, daß die aufgrund des Fahrwiderstandes dem Fahrzeug entzogene kinetische Energie unter Verwendung eines in der Verarbeitungsvorrichtung abgespeicherten Widerstandsprofils in Abhängigkeit der Signale des Radsensors bestimmbar ist. Wenn dabei sowohl die Geschwindigkeit des Fahrzeugs als auch dessen absolute Position auf einer vorgegebenen Fahrstrecke des Fahrzeugs zugrunde gelegt werden, ergibt sich ein Kennfeld für den Fahrwiderstand, aus dem der momentane Fahrwiderstand unter Kenntnis der momentanen Geschwindigkeit und der momentanen absoluten Position des Fahrzeugs bestimmbar ist.

Die Erfindung betrifft auch ein Fahrzeug, das wenigstens ein zur Fortbewegung vorgesehenes Rad aufweist, an dem wenigstens ein erstes Bremselement vorgesehen ist. Am Fahrzeug selbst ist wenigstens ein zweites Bremselement vorgesehen, das zum Bremsen des Fahrzeugs durch eine Betätigungseinrichtung mit dem zweiten Bremselement in einen Reibkontakt bringbar ist. Ferner ist eine Vorrichtung zum Bestimmen der Temperatur des ersten Bremselements und/oder des zweiten Bremselements vorgesehen, wie sie vorstehend beschrieben ist. Das erste Bremselement ist dabei vorteilhafterweise als Bremsscheibe ausgebildet, während das zweite Bremselement einen Bremsbelag aufweist.

Das erfindungsgemäße Verfahren zum Bestimmen bzw. Vorhersagen der Temperatur eines an einem Rad eines Fahrzeugs vorgesehen ersten Bremselements und/oder eines am Fahrzeug vorgesehenen zweiten Bremselements weist die folgenden Schritte auf:
a) Bestimmen der Gewichtskraft der Zuladung des Fahrzeugs,
b) Bestimmen der momentanen Winkelgeschwindigkeit des Rads,
c) Bestimmen des Zustands der Betätigungseinrichtung,
   wobei wenigstens die Schritte b) und c) schleifenartig wiederholt ausgeführt werden und wobei zu wenigstens einem Bestimmungszeitpunkt der Schritt des Berechnens der Veränderung der kinetischen Energie des Fahrzeugs zwischen einem vorhergehenden Bestimmungszeitpunkt und dem aktuellen Bestimmungszeitpunkt vorgesehen ist. Die kinetische Energie des Fahrzeugs wird dabei aus der gesamten Masse des Fahrzeugs und der Geschwindigkeit des Fahrzeugs über dem Untergrund berechnet. Bei einem Rollen des Fahrzeugs auf dem Untergrund ergibt sich die Geschwindigkeit des Fahrzeugs dabei direkt aus der momentanen Winkelgeschwindigkeit des Rads des Fahrzeugs, das auf dem Untergrund abrollt. Bei dem erfindungsgemäßen Verfahren sind ferner die folgenden Schritte vorgesehen:
d) Bestimmen der dem ersten Bremselement und/oder dem zweiten Bremselement zugeführten Wärmeenergie aus der Abnahme der kinetischen Energie des Fahrzeugs zwischen dem vorhergehenden Bestimmungszeitpunkt und dem aktuellen Bestimmungszeitpunkt, wenn sich die Betätigungseinrichtung in betätigtem Zustand befindet, und
e) Berechnen der Temperatur des ersten Bremselements und/oder des zweiten Bremselements aus der im ersten Bremselement und/oder im zweiten Bremselement gespeicherten Wärmeenergie,
f) Bestimmen, aus der aktuellen Temperatur des ersten Bremselements, einer maximal zulässigen Geschwindigkeit, aus der das Fahrzeug bis zum Stillstand abbremsbar ist, ohne eine vorgegebene Maximaltemperatur des ersten Bremselements zu überschreiten, und Ausgeben der Maximalgeschwindigkeit an einen Fahrer des Fahrzeugs.

Das erfindungsgemäße Verfahren ermöglicht es, besonders einfach und genau festzustellen, welcher Betrag an Wärmeenergie dem ersten Bremselement und/oder dem zweiten Bremselement zugeführt worden sind. Einer der der Erfindung zugrundeliegenden Gedanken beruht nämlich darauf, daß sich die Ungenauigkeiten bei der Vorhersage der Temperatur des ersten Bremselements und/oder des zweiten Bremselements aus der ungenauen Bestimmung der diesen Bremselementen zugeführten Wärmeenergien ergeben. Mit dem erfindungsgemäßen Verfahren läßt sich diese Wärmeenergie besonders genau bestimmen, so daß eine genaue Vorhersage der Temperatur ermöglicht ist.

Weitere Verfahrensschritte betreffen den Betrieb der erfindungsgemäßen Vorrichtung, wie er obenstehend beschrieben ist. So kann das Bestimmen der Ausgangstemperatur der Bremselemente zum Zeitpunkt der Inbetriebnahme des Fahrzeugs vorgesehen sein. Weiterhin kann in die Berechnung der Temperatur des Bremselements zum aktuellen Bestimmungszeitpunkt auch die vom Bremselement abgeführte Wärmeenergie sowie ein gesondert bestimmter Wert für die dem Bremselement zugeführte Wärmeenergie aufgrund der zwischen dem ersten Bremselement und/oder dem zweiten Bremselement ausgeübten Kraft vorgesehen sein.

Schließlich ist es auch möglich, Veränderungen der potentiellen Energie und der kinetischen Energie des Fahrzeugs einzubeziehen, wobei dessen kinetische Energie beispielsweise durch den Fahrwiderstand des Fahrzeugs vermindert wird.

Das erfindungsgemäße Verfahren zeichnet sich durch den Schritt des Vorherbestimmens einer Maximalgeschwindigkeit für einen Zeitpunkt nach dem aktuellen Bestimmungszeitpunkt aus. Dies ist besonders dann vorteilhaft, wenn bekannt ist, daß das Fahrzeug zwischen zwei Bestimmungszeitpunkten von einer Ausgangsgeschwindigkeit auf eine Maximalgeschwindigkeit beschleunigt und danach wieder auf die Ausgangsgeschwindigkeit abgebremst wird, wie es bei dem Betrieb einer U-Bahn zwischen zwei aufeinanderfolgenden Haltestellen der Fall ist.

Das erfindungsgemäße Verfahren stellt auch ein Temperaturmodell in Form einer Software bereit, mit der sich die Temperatur insbesondere einer Bremsscheibe berechnen läßt, ohne daß zur Berechnung ein besonderer Sensor notwendig ist.

Diese Software kann in die Bremssteuerelektronik eines Fahrzeugs installiert werden und bei jeder Bremsung eine Berechnung durchführen. Wenn die Temperatur der Bremsscheibe einen kritischen Wert erreicht, wird dem Fahrer über ein Signal mitgeteilt, daß entweder die Geschwindigkeit auf einen Maximalwert herunterzusetzen ist, bei dem ein weiterer Temperaturanstieg nicht zu befürchten ist, oder der Fahrer bekommt eine errechnete Maximalgeschwindigkeit vorgegeben, die abhängig von der Beladung des Fahrzeugs und gegebenenfalls auch vom Streckenprofil von kommenden Streckenabschnitten ist. Im letzteren Fall kann das Fahrzeug bei einer geringeren Ladung durchaus noch schneller fahren und Beeinträchtigungen des Fahrbetriebs sind nicht zu befürchten.

Gemäß dem erfindungsgemäßen Verfahren wird die der Bremsscheibe zugeführte Energie über die kinetische Energie aus der Geschwindigkeitsänderung innerhalb zweier Zeitschritte und der Achslasten des Fahrzeugs berechnet. Wenn das Fahrzeug zu einem Zeitpunkt einen Berg hinauffährt, könnte das erfindungsgemäße Verfahren in seiner einfachsten Form zu ungenauen Ergebnissen führen, da sich die Geschwindigkeit des Fahrzeugs verringert, ohne daß eine Bremsung vorliegt. Für solche Fälle sieht das erfindungsgemäße Verfahren noch das Abtasten einer sogenannten Bremsanforderung vor, die vorliegen muß, damit davon ausgegangen wird, daß der Bremsscheibe überhaupt eine Energie zugeführt wird. Zusätzlich kann der errechnete Energieaufwand in die Bremsscheibe mit der über den Zeitschritt gemittelten Bremsanforderungskraft verglichen werden, um eventuelle Bergfahrten mit kombinierten Bremsungen zu erkennen. Dies führt zu besonders genauen Ergebnissen des erfindungsgemäßen Verfahrens.

Ebenso können eine potentielle Energie und der Fahrwiderstand mit in die Ermittlung der der Bremsscheibe zugeführten Energie einfließen, sofern die benötigten Werte wie Höhenprofil der Strecke und Fahrwiderstand des Fahrzeugs bekannt sind.

Es kann auch ein Drucksensor im Bremssystem vorhanden sein, der uns den genauen Vorsteuerdruck liefert. Hierüber kann ebenfalls der gesamte Energieaufwand berechnet werden, der in die Scheibe einfließt. Über den Druck des Bremszylinders, der Übertragung des Bremsgestänges und dem Reibwert zwischen Bremsscheibe und Belag läßt sich die der Bremsscheibe zugeführten Energie ermitteln.

Die ermittelte Energiedifferenz wird zum größten Teil als Wärmeenergie in die Bremsscheibe geleitet. Ein geringerer Teil wird von den Bremsbelägen aufgenommen. Dieser geringe Teil läßt sich über die Stoffzusammensetzungen der Bremsscheibe und der Bremsbeläge ermitteln. Die Wärmeenergie wird der Bremsscheibe ausschließlich über die Bremsfläche zugeführt. Von dort aus wird die Wärmeenergie wegen der Wärmeleitfähigkeit der Bremsscheibe in das Scheibeninnere transportiert. Die Bremsscheibe wird in einer bevorzugten Ausführungsform des erfindungsgemäßen Verfahrens rechnerisch in zahlreiche Schichten gleicher Breite eingeteilt und für jede Schicht wird eine von der nebenliegenden Schicht abhängige Temperatur errechnet. Damit werden zu jedem Zeitschritt die genauen Temperaturen innerhalb der Bremsscheibe und an den Rändern der Bremsscheibe ermittelt.

Aus der Energie, die in die Bremsscheibe einfließt, und aus den Lüfterwirkungen der Bremsscheibe lassen sich die jeweiligen aktuellen Temperaturen an allen Stellen der Bremsscheibe berechnen.

Dem Fahrer des Fahrzeugs kann über ein einfaches Signal, beispielsweise über eine Lampe oder über ein Display, mitgeteilt werden, daß er die Fahrgeschwindigkeit des Fahrzeugs reduzieren muß. Die maximale Fahrgeschwindigkeit kann zuvor mit einem anderen Simulationsprogramm für unterschiedliche Strecken und Belastungszustände des Fahrzeugs ermittelt werden. Wenn die Temperatur der Bremsscheibe wieder sinkt, wird dies von der erfindungsgemäßen Vorrichtung erkannt und das Warnsignal wird wieder zurückgenommen. Damit besteht für das Fahrzeug keine Geschwindigkeitsbegrenzung mehr.

Es ist auch eine kontinuierliche Geschwindigkeitsprüfung möglich, bei der dem Fahrer über ein Display eine maximale Geschwindigkeit vorgegeben wird. Diese Geschwindigkeit bestimmt sich aus der aktuellen Temperatur der Bremsscheibe, aus dem Lastdruck (Masse des Fahrzeugs) und aus den kommenden Streckendaten für den nächsten Abschnitt der Fahrstrecke des Fahrzeugs, wenn diese vorhanden sind. Bei einer U-Bahn wird demnach an jeder Haltestelle eine neue, maximale Geschwindigkeit für den nächsten Streckenabschnitt berechnet. Wenn die Streckendaten der Fahrstrecke der U-Bahn nicht vorliegen, wird eine gemittelte Strecke vorgegeben, auf deren Basis die Maximalgeschwindigkeit ermittelt wird.

Die Erfindung ist in der Zeichnung anhand eines Ausführungsbeispiels näher veranschaulicht.
- Figur 1: zeigt ein schematisches Blockschaltbild, das die erfindungsgemäße Bremsanlage eines Fahrzeugs veranschaulicht,
- Figur 2: zeigt ein Struktogramm eines EDV-Programms, das in einer Bremssteuerungsvorrichtung des Fahrzeugs aus Figur 1 abläuft,
- Figur 3: zeigt ein Unterprogramm des EDV-Programms aus Figur 2,
- Figur 4: zeigt ein weiteres Unterprogramm des EDV-Programms aus Figur 2,
- Figur 5: zeigt ein weiteres Unterprogramm des EDV-Programms aus Figur 2,
- Figur 6: zeigt ein weiteres Unterprogramm des EDV-Programms aus Figur 2,
- Figur 7: zeigt ein weiteres Unterprogramm des EDV-Programms aus Figur 2,
- Figur 8: zeigt ein weiteres Unterprogramm des EDV-Programms aus Figur 2.

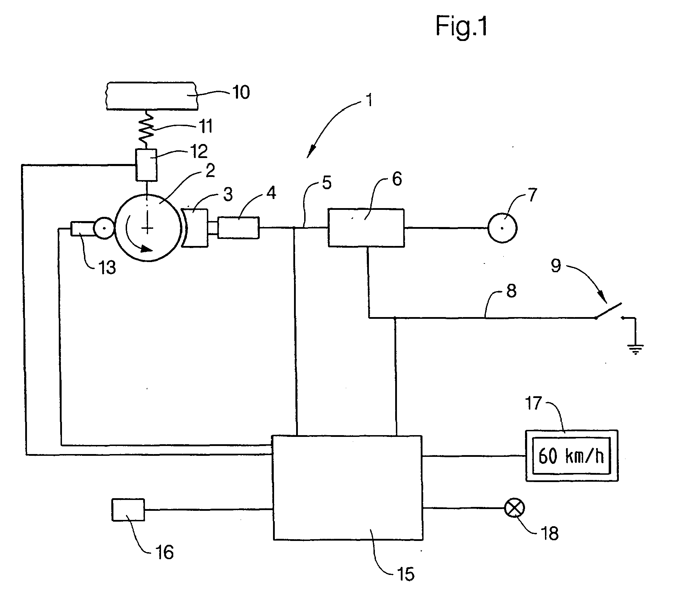

Figur 1 zeigt eine schematische Darstellung einer erfindungsgemäßen Bremsanlage 1 eines Fahrzeuges, von dem hier eine Bremsscheibe 2 mit einem Bremsbelag 3 gezeigt ist, der von einem Bremszylinder 4 betätigbar ist. Der Bremszylinder 4 kann über eine Bremsleitung 5 von einem Bremssteuergerät 6 mit Druckluft aus einer Druckluftquelle 7 beaufschlagt werden, wenn eine Bremsung durchgeführt werden soll. Das Bremssteuergerät 6 kann hierfür über eine Signalleitung 8 mit einem Bremssignal angesteuert werden, das vom Bedienpersonal des Fahrzeugs über eine Bedieneinrichtung wie einen Schalter 9 auslösbar ist.

Weiterhin sind am Fahrzeug im Bereich zwischen einem Fahrzeugrahmen 10 und je einer Bremsscheibe 2 eine Federung 11 mit je einem Radlastsensor 12 vorgesehen. Mit Hilfe des Radlastsensors ist die Last bestimmbar, die auf dem zur Bremsscheibe 2 gehörenden Rad des Fahrzeugs lastet.

Zur Messung der momentanen Winkelstellung der Bremsscheibe 2 bezüglich des Fahrzeugrahmens 10 ist in deren Bereich ein Radsensor 13 angeordnet.

Im Bereich der Bremsanlage 1 ist eine zentrale Verarbeitungsvorrichtung 15 angeordnet, die Signale vom Radlastsensor 12, vom Radsensor 13, von der Bremsleitung 5, von der Signalleitung 8 und von einem Temperatursensor 16 empfängt, der die Umgebungstemperatur der Bremsanlage 1 abtastet. Die Verarbeitungsvorrichtung 15 weist einen hier nicht näher dargestellten Steuerungsrechner auf, der die eingegebenen Signale verarbeitet und der Daten über ein an die Verarbeitungsvorrichtung 15 angeschlossenen Display 17 sowie über eine Warnlampe 18 ausgeben kann.

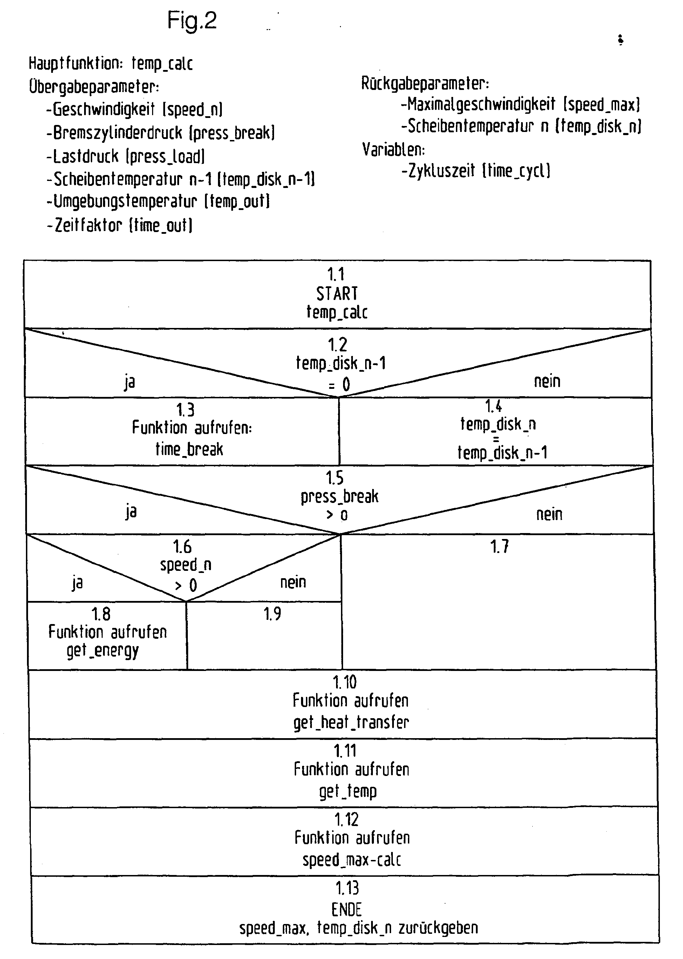

In Figur 2 bis Figur 8 werden Struktogramme gezeigt, die die Vorgehensweise bei der Ausführung des erfindungsgemäßen Verfahrens in der Bremsanlage veranschaulichen. Die Verfahrensschritte werden dabei von dem in Figur 1 nicht gezeigten Steuerungsrechner in der Verarbeitungsvorrichtung 15 ausgeführt.

Für das grundsätzliche Verständnis zum Nachvollziehen des erfindungsgemäßen Verfahrens wird vorausgesetzt, daß eine in der Figur 1 nicht gezeigte Zeitbasiseinrichtung ständig im wesentlichen äquidistante Zeitinformationen erzeugt, die in einer Variablen t abgespeichert werden. Dabei kann die Zeitbasiseinrichtung durch einen quarzgesteuerten Zähler bereitgestellt werden, der in regelmäßigen Abständen den Wert der Variablen t um einen bestimmten Wert erhöht.

Das erfindungsgemäße Verfahren basiert auf dem Vergleich von sich ändernden Daten zu einem aktuellen Bestimmungszeitpunkt mit den Werten zu einem dem aktuellen Bestimmungszeitpunkt vorhergehenden Bestimmungszeitpunkt. Der Einfachheit halber werden Werte von Daten zum aktuellen Bestimmungszeitpunkt mit dem Index "n" bezeichnet, während Werte von Daten zu dem dem aktuellen Bestimmungszeitpunkt vorhergehenden Zeitpunkt mit dem Index "n-1" bezeichnet werden. Entsprechend erhalten Variablen, die Daten aufnehmen, die dem aktuellen Bestimmungszeitpunkt zugeordnet sind, einen Suffix "_n", während Variablen, die Werte von Daten aufnehmen, die dem vorhergehenden Bestimmungszeitpunkt zugeordnet sind, den Suffix "_n-1" erhalten.

Zur vereinfachten Beschreibung des erfindungsgemäßen Verfahrens wird dabei anstelle der Bezeichnung "zum aktuellen Bestimmungszeitpunkt" die Bezeichnung "zum Zeitpunkt n" verwendet und anstelle der Bezeichnung "zu dem dem aktuellen Bestimmungszeitpunkt vorhergehenden Bestimmungszeitpunkt" wird die Bezeichnung "zum Zeitpunkt n-1" verwendet.

Das erfindungsgemäße Verfahren verarbeitet die aus der Bremsanlage 1 aus Figur 1 zur Verfügung gestellten Daten in einer Reihe von Variablen, die der Übersicht halber nachstehend in Form einer Tabelle zusammen mit ihrer Bedeutung sowie unter Angabe des Sensors, durch den sie geliefert werden, aufgelistet sind.

| Variablenname | Bedeutung | geliefert von: |
|---|---|---|
| speed_n | Geschwindigkeit zum Zeitpunkt n | Radsensor 13 |
| speed_n-1 | Geschwindigkeit zum Zeitpunkt n-1 | Radsensor 13 |
| press_break | Bremszylinderdruck | Bremsleitung 5 |
| press_load | Lastdruck/Fahrzeuglast | Radlastsensor 12 |
| temp_out | Umgebungstemperatur | Temperatursensor 16 |

Das erfindungsgemäße Verfahren wird in diesem Ausführungsbeispiel mit der Information aus der Bremsleitung 5, nämlich dem Bremszylinderdruck in der Variablen press_break, durchgeführt. In dem erfindungsgemäßen Verfahren wird dabei jedoch ausschließlich überprüft, ob der Bremszylinderdruck gleich 0 oder verschieden von 0 ist. Dieselbe Information könnte auch durch Auswertung der Signale auf der Signalleitung 8 erhalten werden. Falls ein Signal auf der Signalleitung 8 anliegt, wird dann davon ausgegangen, daß der Bremszylinderdruck verschieden von 0 ist und daß der Bremszylinder 4 betätigt ist. In einer hier nicht näher beschriebenen Weiterbildung der Erfindung könnte auch die absolute Größe des in der Bremsleitung 5 vorhandenen Bremsdrucks ausgewertet werden, wodurch zusätzlich Informationen über die der Bremsscheibe 2 und dem Bremsbelag 3 zugeführte Energie gewonnen werden können.

Mit der vom Radsensor 13 gemessenen Geschwindigkeit ist stets die Geschwindigkeit des Fahrzeugs 10 gemeint.

In der nachfolgenden Tabelle sind die internen Werte aufgeführt, die von dem erfindungsgemäßen Programm während des Ablaufs verwendet werden, sowie die Namen der Variablen, in denen diese internen Werte gespeichert werden.

| Variablenname | Bedeutung |
|---|---|
| time_cycl | Zykluszeit = Zeit pro Funktionsaufruf |
| energy_break | Bremsenergie |
| temp_max | Maximaltemperatur |
| alpha | Wärmeübergangszahlen |
| temp_disc_n-1 | Scheibentemperatur zum Zeitpunkt n-1 |
| var_time_temp | Variable mit letzter Zeit und Temperatur |
| time_n | Zeit zum aktuellen Bestimmungszeitpunkt |

Schließlich werden noch Variablen verwendet, deren Werte an Komponenten der Bremsanlage 1 ausgegeben werden, und zwar gemäß der folgenden Tabelle:

| Variablenname | Bedeutung | Ausgabe an Komponente |
|---|---|---|
| speed_max | Maximalgeschwindigkeit | Display 17 |
| temp_disc_n | Scheibentemperatur zum Zeitpunkt n | Warnlampe 18 |

Die Verarbeitungsvorrichtung 15 ist so ausgebildet, daß einem Fahrer des Fahrzeugs 10 nicht die aktuelle Scheibentemperatur der Bremsscheibe 2 angezeigt wird, sondern vielmehr erst dann ein Warnsignal durch Betätigen der Warnlampe 18 an den Fahrer ausgegeben wird, wenn eine bestimmte vorgegebene Scheibentemperatur der Bremsscheibe 2 überschritten wird.

Das EDV-Programm, das das erfindungsgemäße Verfahren umsetzt, hat eine Hauptfunktion "temp_calc", die mehrere Unterfunktionen aufruft. Die Unterfunktionen der Hauptfunktion "temp_calc", die zur Berechnung der Maximalgeschwindigkeit des Fahrzeugs 10 dienen, sind in der nachfolgenden Tabelle erläutert.

| Funktionsname | Aufgabe |
|---|---|
| get_energy | Bremsenergie ermitteln |
| get_heat_transfer | Wärmeübergangszahlen ermitteln |
| get_temp | Temperaturen der Bremsscheibe 2 errechnen |
| temp_break | Einschalttemperatur der Bremsscheibe 2 berechnen |
| speed_max_calc_mo 1 | Maximalgeschwindigkeit nach Modell 1 bestimmen |
| speed_max_calc_mo 2 | Maximalgeschwindigkeit nach Modell 2 bestimmen |

Figur 2 veranschaulicht anhand eines Struktogramms den Ablauf der Hauptfunktion "temp_calc".

Das Struktogramm weist einen Anfangsschritt 1.1 "START" sowie einen Endschritt 1.13 "ENDE" auf, zwischen denen zahlreiche Programmschritte schleifenartig wiederholt ausgeführt werden, solange die Bremsanlage 1 betrieben wird.

Bei der Inbetriebnahme der Bremsanlage 1 werden sämtliche Variablen in der Verarbeitungsvorrichtung 15 auf den Wert 0 initialisiert. Lediglich die Zeitbasiseinrichtung zur Erzeugung von Zeitinformationen wird nicht initialisiert, so daß die Informationen in der Variablen t erhalten bleiben.

In der Hauptfunktion temp_calc gemäß Figur 2 wird in einem ersten Schritt 1.2 überprüft, ob der in der Variablen temp_disc_n-1 gespeicherte Wert dem Initialisierungswert 0 entspricht. Falls dies der Fall ist, was darauf hindeutet, daß die Verarbeitungsvorrichtung 15 seit dem letzten Ablauf der Hauptfunktion temp_calc wenigstens einmal ausgeschaltet und daraufhin wieder eingeschaltet wurde, wird in Schritt 1.3 die Funktion time_break aufgerufen, die die dann notwendigen Schritte ausführt. Andernfalls wird die Variable temp_disc_n auf den Wert der Variablen temp_disc_n-1 gesetzt, und zwar in Schritt 1.4. Dadurch wird der in der Variablen temp_disc_n-1 enthaltene Wert zum Ausgangswert der Berechnung der neuen Temperatur der Bremsschreibe zum Zeitpunkt n gemacht.

Im Schritt 1.5 wird überprüft, ob die Bedingung press_break > 0 erfüllt ist, was darauf hindeutet, daß die Bremsanlage 1 durch den Fahrer des Fahrzeugs 10 betätigt worden ist. Falls dies der Fall ist, wird in Schritt 1.6 überprüft, ob die aktuelle Geschwindigkeit zum Zeitpunkt n größer als 0 ist. Falls dies der Fall ist, wird im Schritt 1.8 die Unterfunktion get_energy aufgerufen, mit der die seit dem Zeitpunkt n-1 der Bremsscheibe 2 und dem Bremsbelag 3 zugeführte Wärmeenergie bestimmt wird. Wenn der Wert der Variablen press_break kleiner oder gleich 0 ist, also wenn die Bremsanlage 1 nicht betätigt worden ist, und/oder wenn der Wert der Variablen speed_n kleiner oder gleich 0 ist, also wenn sich das Fahrzeug 10 nicht in Fahrtrichtung bewegt, wird gemäß den Schritten 1.7 bzw. 1.9 nichts veranlaßt.

Im nächsten Schritt 1.10 wird die Unterfunktion get_heat_transfer aufgerufen, mit der die von der Bremsscheibe 2 und vom Bremsbelag 3 abgegebene Wärmeenergie aufgrund von Konvektion, Wärmeleitung und Wärmestrahlung berechnet wird.

Im nächsten Schritt 1.11 wird die Funktion get_temp aufgerufen, mit der aufgrund der festgestellten Energiebilanz von zugeführter Energie und abgeführter Energie ausgehend von der Bremsscheibentemperatur temp_disc_n-1 die neue Temperatur der Bremsscheibe temp_disc_n errechnet wird.

Im Schritt 1.12 wird die Unterfunktion speed_max_calc aufgerufen, wobei im vorliegenden Fall gemäß der Erfindung nach Wahl des Fahrers und/oder Herstellers des Fahrzeugs 10 ausgewählt werden kann, ob ihm per einfachem, durch die Warnlampe 18 abgegebenem Signal mitgeteilt wird, daß er die Geschwindigkeit des Fahrzeugs 10 reduzieren muß, oder ob ihm über das Display 17 eine maximale Geschwindigkeit vorgegeben wird. Im ersten Fall wird im Schritt 1.12 die Unterfunktion speed_max_calc_mo1 aufgerufen und im zweiten Fall wird im Schritt 1.12 die Unterfunktion speed_max_calc_mo2 aufgerufen.

Im Schritt 1.13 ENDE wird der Wert der Variablen speed_max sowie der Wert der Variablen temp_disc_n zur weiteren Verarbeitung in der Verarbeitungsvorrichtung 15 bereitgestellt. Dort wird je nach Anforderungen des Fahrers des Fahrzeugs 10 die maximale Geschwindigkeit über das Display 17 ausgegeben. Optional kann auch die momentane Temperatur der Bremsscheibe 2 gemäß dem Wert temp_disc_n auf dem Display 17 angezeigt werden.

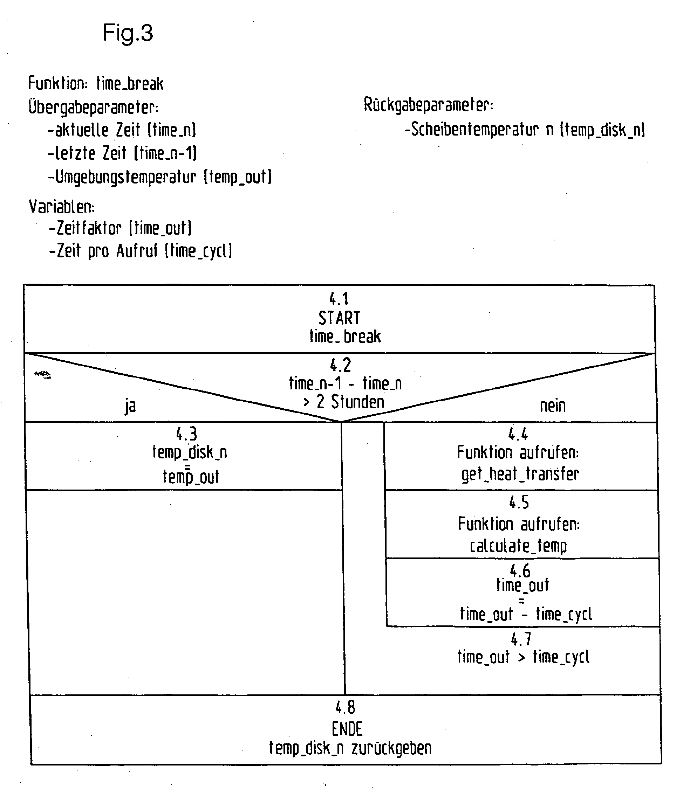

Figur 3 zeigt ein Struktogramm, das die Arbeitsweise der Unterfunktion time_break veranschaulicht.

Die Funktion time_break beginnt mit Schritt 4.1 START. Darauf wird in Schritt 4.2 abgefragt, ob die Bedingung time_n-1 minus time_n > 2 Stunden erfüllt ist. Mit dieser Abfrage wird bestimmt, ob das Ausschalten und Wiedereinschalten der Verarbeitungsvorrichtung 15 länger als 2 Stunden her ist. Falls diese Bedingung erfüllt ist, also wenn die Zeitdifferenz zwischen dem aktuellen Bestimmungszeitpunkt zum Zeitpunkt n und dem vorhergehenden Bestimmungszeitpunkt zum Zeitpunkt n-1 größer als 2 Stunden ist, dann wird angenommen, daß sich die Bremsscheibe 2 und der Bremsbelag 3 vollständig auf Umgebungstemperatur abgekühlt haben. In diesem Fall wird in Schritt 4.3 der Variablen temp_disc_n der Wert der Variablen temp_out zugewiesen.

Falls im Schritt 4.2 festgestellt wird, daß der vorhergehende Bestimmungszeitpunkt innerhalb des Zeitraums von 2 Stunden von dem aktuellen Bestimmungszeitpunkt gelegen ist, dann wird in Schritt 4.7 eine lokale Schleife ausgeführt, bis die Bedingung time_out > time_cycl erfüllt ist. Innerhalb der Schleife gemäß Schritt 4.7 wird in Schritt 4.4 zunächst die Unterfunktion get_heat_transfer aufgerufen, dann wird in Schritt 4.5 die Unterfunktion calculate_temp und schließlich wird in Schritt 4.6 der Variablen time_out der Wert der Differenz der Variablen time_out - time_cycl zugewiesen. Durch die aufeinanderfolgend ausgeführten Schritte 4.4 bis 4.6 wird das Abkühlverhalten der Bremsscheibe 2 und des Bremsbelags 3 simuliert, wobei die Zeitdauer zwischen dem aktuellen Bestimmungszeitpunkt und dem vorhergehenden Bestimmungszeitpunkt in diskrete Zeitschritte aufgeteilt wird, die jeweils die Weite time_cycl aufweisen. Zu jedem dieser Zeitschritte wird eine Temperatur der Bremsscheibe 2 errechnet, wobei ausgehend von diesem berechneten Wert im nächsten Durchgang der Schleife 4.7 ein neuer Wert für die Temperatur der Bremsscheibe 2 berechnet wird.

Am Ende der Unterfunktion time_break wird in Schritt 4.8 die aktuelle Temperatur der Bremsscheibe 2 als Wert in der Variablen temp_disc_n an die Hauptfunktion temp_calc zurückgegeben.

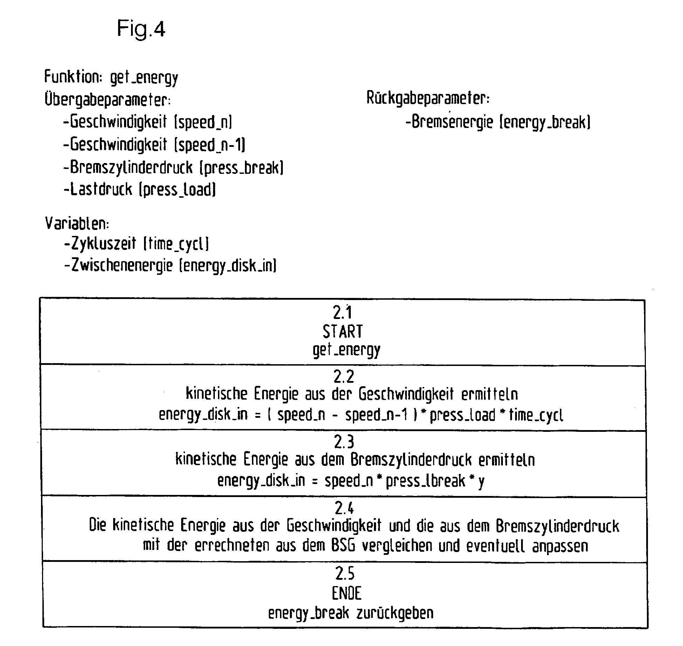

Figur 4 veranschaulicht die Unterfunktion get_energy anhand eines Struktogramms. Nach dem Schritt 2.1 START der Unterfunktion get_energy wird die der Bremsscheibe 2 und die dem Bremsbelag 3 zugeführte Wärmeenergie ermittelt. Hierzu wird in Schritt 2.2 die Verringerung der kinetischen Energie des Fahrzeugs 10 zwischen dem vorhergehenden Bestimmungszeitpunkt und dem aktuellen Bestimmungszeitpunkt bestimmt. Außerdem wird in Schritt 2.3 die Reibungsarbeit berechnet, die der Bremsbelag 3 aufgrund der Anpresskraft des Bremszylinders 4 auf der Bremsscheibe 2 leistet. Bei dem Wert Y handelt es sich um den Reibwert zwischen Bremsscheibe und Bremsbacke. Mit BSG ist das Bremssteuergerät gemeint, also der Rechner, der die Bremssteuerung übernimmt und in dem das Temperaturmodel laufen soll.

Im Schritt 2.4 wird die Veränderung der kinetischen Energie des Fahrzeugs aus der Geschwindigkeit gemäß Schritt 2.2 mit der Reibungsarbeit gemäß Schritt 2.3 sowie mit einer simulierten Energie BSG verglichen und in einem hier nicht näher erläuterten Anpassungsverfahren aufeinander angepaßt.

Im Schritt 2.5 ENDE wird schließlich ein Wert energy_break als Wert für die in die Bremsscheibe 2 und in den Bremsbelag 3 zugeführte Energie bei der Bremsung des Fahrzeugs 10 an die Hauptfunktion temp_calc zurückgegeben.

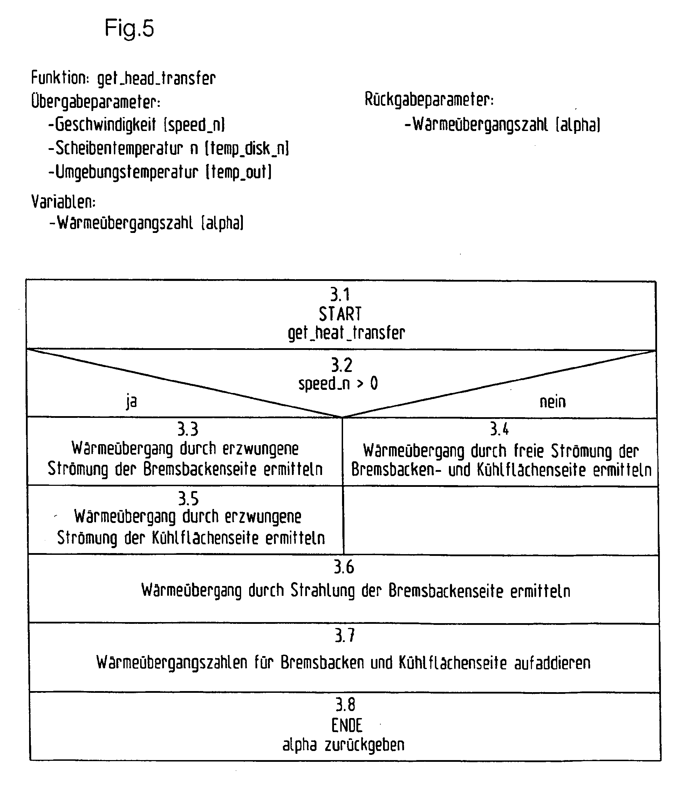

Figur 5 veranschaulicht die Unterfunktion get_heat_transfer anhand eines Struktogramms. Unmittelbar in Anschluß an den Schritt 3.1 START wird in Schritt 3.2 untersucht, ob die Bedingung speed_n > 0 erfüllt ist. Falls dies der Fall ist, was darauf hindeutet, daß sich das Fahrzeug 10 in Bewegung befindet, wird in Schritt 3.3 zunächst der Wärmeübergang durch erzwungene Strömung auf der Bremsbackenseite der Bremsscheibe 2 errechnet und danach in Schritt 3.5 der Wärmeübergang durch erzwungene Strömung auf der Kühlflächenseite der Bremsscheibe 2 ermittelt. Falls in Schritt 3.2 festgestellt wird, daß die Bedingung speed_n > 0 nicht erfüllt ist, was darauf hindeutet, daß das Fahrzeug steht, wird in Schritt 3.4 der Wärmeübergang durch freie Strömung auf der Bremsbackenseite und der Kühlflächenseite der Bremsscheibe 2 ermittelt.

Nachfolgend wird im Schritt 3.6 der Wärmeübergang durch Strahlung auf der Bremsbackenseite und/oder der Kühlflächenseite der Bremsscheibe 2 ermittelt und in Schritt 3.7 werden die Wärmeübergangszahlen für die Bremsbackenseite und die Kühlflächenseite der Bremsscheibe 2 aufaddiert. In einem abschließenden Schritt 3.8 ENDE wird der Wert alpha an die Hauptfunktion temp_calc zurückgegeben.

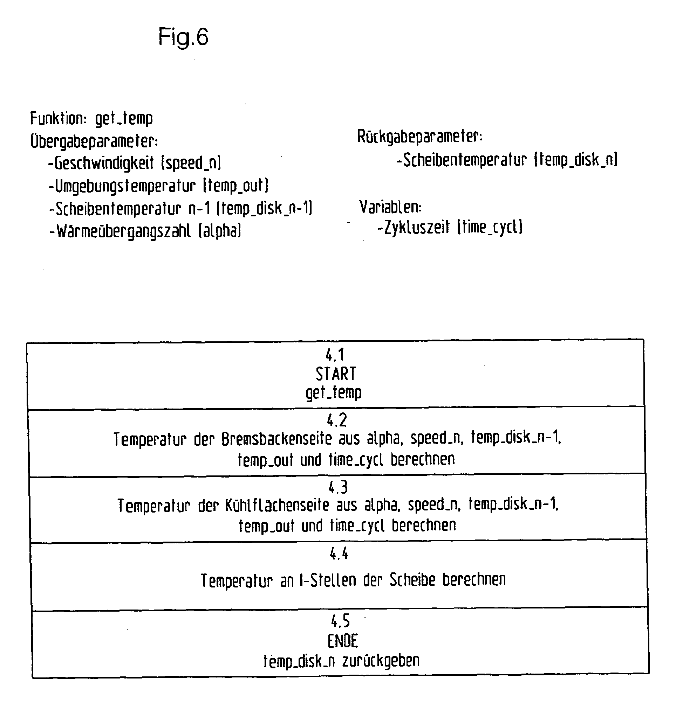

Figur 6 veranschaulicht die Unterfunktion get_temp anhand eines Struktogramms. Nach dem Schritt 4.1 START wird in Schritt 4.2 die Temperatur der Bremsbackenseite der Bremsscheibe 2 aus den Werten der Variablen alpha, speed_n, temp_disc_n-1, temp_out und time_cycl berechnet. Danach wird in Schritt 4.3 die Temperatur der Kühlflächenseite der Bremsscheibe 2 aus den Werten der Variablen alpha, speed_n, temp_disc_n-1, temp_out und time_cycl berechnet.

Im Schritt 4.4 wird die Temperatur an zahlreichen Stellen der Bremsscheibe 2 berechnet, wobei in Schritt 4.5 ENDE der so errechnete Wert temp_disc_n als neuer Wert der Temperatur der Bremsscheibe 2 und des Bremsbelags 3 an das Hauptprogramm temp_calc zurückgegeben wird.

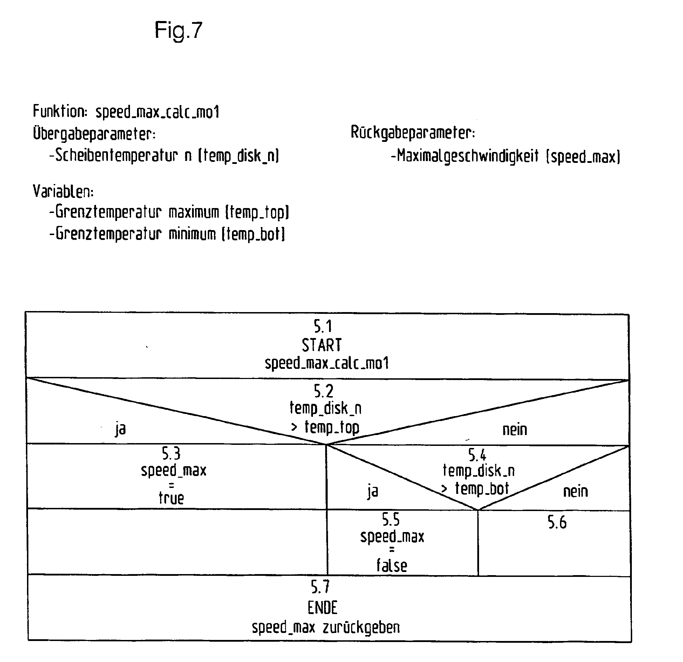

Figur 7 veranschaulicht die Unterfunktion speed_max_calc_mo1 anhand eines Struktogramms, die eine Maximalgeschwindigkeit speed_max des Fahrzeugs 10 zurückgibt, die nicht überschritten werden darf. Dabei wurde in einem separaten Anpassungsschritt sowohl eine maximale Grenztemperatur als auch eine minimale Grenztemperatur für die Bremsscheibe 2 und den Bremsbelag 3 festgelegt, und zwar mittels eines Simulationsprogramms für unterschiedliche Strecken und Belastungszustände.

In Schritt 5.2 wird dabei überprüft, ob die Bedingung temp_disc_n > temp_top erfüllt ist. Falls dies der Fall ist, wird in Schritt 5.3 der Variablen speed_max der Wert "true" zugewiesen. Falls die Bedingung temp_disc_n > temp_top nicht erfüllt ist, wird im nachfolgenden Schritt 5.4 überprüft, ob die Bedingung temp_disc_n < temp_bot erfüllt ist. Falls dies der Fall ist, wird der Variablen speed_max der Wert "false" zugewiesen, wie in Schritt 5.5 dargestellt ist. Falls dies nicht der Fall ist, wird gemäß Schritt 5.6 nichts ausgeführt. Im letzten Schritt der Unterfunktion speed_max_calc_mo1 wird im Schritt 5.7 ENDE der Wert speed_max zurückgegeben. Falls speed_max den Wert "true" aufweist, wird die Warnlampe 18 in Betrieb gesetzt. Falls der Wert speed_max den Wert "false" aufweist, wird die Warnlampe 18 ausgeschaltet.

Im Ergebnis wird dem Fahrer über ein einfaches Signal der Warnlampe 18 mitgeteilt, daß er die Geschwindigkeit des Fahrzeugs 10 reduzieren muß. Der Temperaturbereich, innerhalb dessen der Variablen speed_max der Wert "true" zugewiesen wird, wurde vorher mit einem anderen Programm für unterschiedliche Strecken und Beladungszustände ermittelt und ist damit festgelegt. Wenn die Temperatur der Bremsscheibe 2 und des Bremsbelags 3 wieder auf einen Wert unterhalb des Werts temp_bot sinkt, wird dies erkannt und die Warnlampe 18 wird wieder ausgeschaltet. Damit besteht für das Fahrzeug 10 keine Geschwindigkeitsbegrenzung mehr.

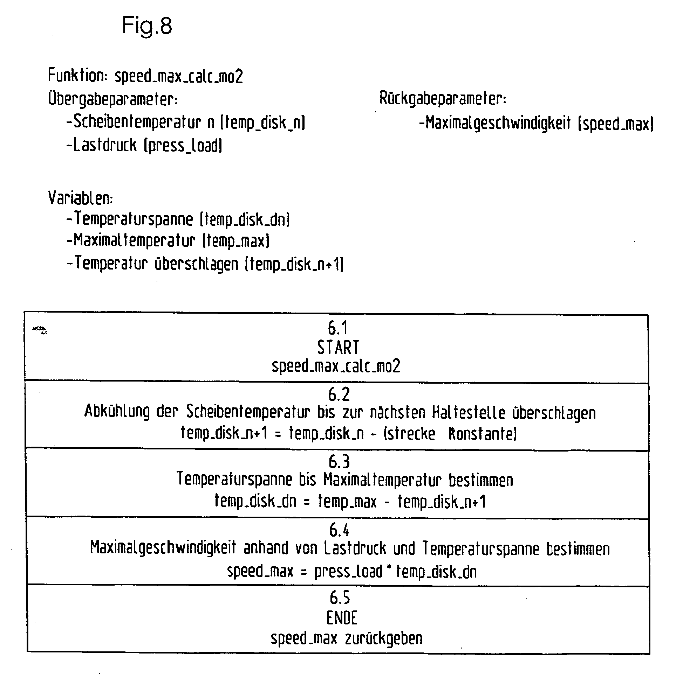

Figur 8 veranschaulicht die Unterfunktion speed_max_calc_mo2, die alternativ zur Unterfunktion speed_max_calc_mo1 eingesetzt werden kann, anhand eines Struktogramms.

Die Unterfunktion speed_max_calc_mo2 wird vorzugsweise für Fahrzeuge 10 eingesetzt, die als U-Bahn betrieben werden. Solche U-Bahnen werden ausgehend von einer Haltestelle auf eine Maximalgeschwindigkeit beschleunigt und an der nächsten Haltestelle auf Stillstand heruntergebremst.

Im Schritt 6.2 wird dazu zunächst die Abkühlung der Temperatur der Bremsscheibe 2 und des Bremsbelages 3 bis zur nächsten Haltestelle überschlagen. In Schritt 6.3 wird die verbleibende Temperaturspanne bis zur vorgegebenen Maximaltemperatur der Bremsscheibe 2 bestimmt, und in Schritt 6.4 wird die zulässige Maximalgeschwindigkeit anhand des Lastdrucks und der Temperaturspanne bestimmt. In Schritt 6.5 ENDE wird eine zulässige Maximalgeschwindigkeit speed_max zurückgegeben, die über das Display 17 dem Fahrer des Fahrzeugs 10 anzeigbar ist.

Im Ergebnis wird die zulässige Maximalgeschwindigkeit speed_max aus einem Temperaturmodell berechnet, in das die aktuelle Temperatur der Bremsscheibe 2, der Lastdruck gemäß dem Radlastsensor 12 und - falls vorhanden - den kommenden Streckendaten für den nächsten Abschnitt zwischen zwei Haltestellen eingeht. Es wird also an jeder Haltestelle eine neue, maximale Geschwindigkeit für den nächsten Streckenabschnitt der U-Bahn berechnet. Wenn die Streckendaten der Bahn nicht vorliegen, dann wird eine gemittelte Strecke vorgegeben, auf deren Basis die Maximalgeschwindigkeit für den nächsten Streckenabschnitt ermittelt wird.

### Bezugszeichenliste

- 1: Bremsanlage ,
- 2: Bremsscheibe
- 3: Bremsbelag
- 4: Bremszylinder
- 5: Bremsleitung
- 6: Bremssteuergerät
- 7: Druckluftquelle
- 8: Signalleitung
- 9: Schalter
- 10: Fahrzeugrahmen
- 11: Federung
- 12: Radlastsensor
- 13: Radsensor
- 15: Verarbeitungsvorrichtung
- 16: Temperatursensor
- 17: Display
- 18: Warnlampe

## Patentansprüche

1. Vorrichtung zum Bestimmen bzw. Vorhersagen der Temperatur eines an einem Rad eines Fahrzeugs (10) vorgesehenen ersten Bremselements (2) und/oder eines am Fahrzeug (10) vorgesehenen zweiten Bremselements (3), wobei das erste Bremselement (2) beim Bremsen des Fahrzeugs (10) durch eine Betätigungseinrichtung mit dem zweiten Bremselement (3) in einen Reibkontakt bringbar ist, wobei die Vorrichtung die folgenden Merkmale aufweist:
- wenigstens einen Radsensor (13), mit Hilfe dessen eine momentane Winkelstellung und/oder die Winkelgeschwindigkeit des Rads bestimmbar ist,
- wenigstens einen Gewichtssensor (12) zur Bestimmung der Gewichtskraft der Zuladung des Fahrzeugs (10),
- eine Zeitbasiseinrichtung zur Erzeugung von Zeitinformationen,
- einen Betätigungssensor zur Bestimmung des Zustandes der Betätigungseinrichtung,
- eine Verarbeitungsvorrichtung (15), die so ausgebildet ist, dass Signale des Radsensors (13), des Gewichtssensors (12), der Zeitbasiseinrichtung und des Betätigungssensors verarbeitbar sind, und die eine Anzeigeeinheit (17, 18) aufweist, mit der das Ergebnis einer durch die Verarbeitungsvorrichtung (15) durchgeführten Verarbeitung ausgebbar ist,
wobei die Verarbeitungsvorrichtung (15) weiterhin so ausgebildet ist, dass zu wenigstens einem Bestimmungszeitpunkt ein Wert für die Änderung der Temperatur des ersten Bremselements (2) und/oder des zweiten Bremselements (3) gegenüber einem vorhergehenden Bestimmungszeitpunkt bestimmbar ist,
wobei dazu im Vergleich mit wenigstens einem in der Verarbeitungsvorrichtung (15) gespeicherten Wert der kinetischen Energie des Fahrzeugs (10) zu einem dem Bestimmungszeitpunkt vorhergehenden Zeitpunkt die dem ersten Bremselement (2) und/oder dem zweiten Bremselement (3) zugeführte Energie bestimmbar ist, und dass die Verarbeitungsvorrichtung (15) so ausgebildet ist, dass die vom ersten Bremselement (2) und/oder vom zweiten Bremselement (3) aufgrund von Wärmestrahlung, Wärmeleitung und/oder Konvektion abgegebene Wärmeenergie bestimmbar ist, wobei die Verarbeitungsvorrichtung (15) so ausgebildet ist, dass sie aus der aktuellen Temperatur des ersten Bremselements (2) eine maximal zulässige Geschwindigkeit ermittelt, aus der das Fahrzeug bis zum Stillstand abgebremst werden kann, ohne eine vorgegebene Maximaltemperatur des ersten Bremselements (2) zu überschreiten, und wobei die Maximalgeschwindigkeit an einen Fahrer des Fahrzeugs ausgebbar ist.

2. Vorrichtung nach Anspruch 1, **dadurch gekennzeichnet, dass** wenigstens ein Temperatursensor (16) zur Bestimmung der Ausgangstemperatur des ersten Bremselements (2) und/oder des zweiten Bremselements (3) zum Zeitpunkt der Inbetriebnahme des Fahrzeugs (10) vorgesehen ist, wobei die Verarbeitungsvorrichtung (15) weiterhin so ausgebildet ist, dass ausgehend von der Ausgangstemperatur zu wenigstens einem Bestimmungszeitpunkt der Wert für die momentane Temperatur des ersten Bremselements (2) und/oder des zweiten Bremselements (3) bestimmbar ist

3. Vorrichtung nach Anspruch 1 oder Anspruch 2, **dadurch gekennzeichnet, dass** die Verarbeitungsvorrichtung (15) so ausgebildet ist, dass die vom ersten Bremselement (2) und/oder vom zweiten Bremselement (3) aufgrund von Wärmestrahlung, Wärmeleitung und/oder Konvektion abgegebene Wärmeenergie bestimmbar ist.

4. Vorrichtung nach einem der vorhergehenden Ansprüche, **dadurch gekennzeichnet, dass** der Betätigungssensor so ausgebildet ist, dass die durch das zweite Bremselement (3) auf das erste Bremselement (2) ausgeübte Kraft bestimmbar ist.

5. Vorrichtung nach einem der vorhergehenden Ansprüche, **dadurch gekennzeichnet, dass** ein Höhensensor zur Bestimmung der potentiellen Energie des Fahrzeugs (10) vorgesehen ist.

6. Vorrichtung nach Anspruch 5, **dadurch gekennzeichnet, dass** die Verarbeitungsvorrichtung (15) so ausgebildet ist, dass die potentielle Energie des Fahrzeugs (10) unter Verwendung eines in der Verarbeitungsvorrichtung abgespeicherten Höhenprofils einer vorgegebenen Fahrstrecke des Fahrzeugs (10) in Abhängigkeit der Signale des Radsensors (13) bestimmbar ist.

7. Vorrichtung nach einem der vorhergehenden Ansprüche, **dadurch gekennzeichnet, dass** ein Sensor zur Bestimmung der aufgrund des Fahrwiderstandes und/oder aufgrund weiter Bremseinrichtungen dem Fahrzeug (10) entzogenen kinetischen Energie vorgesehen ist.

8. Vorrichtung nach Anspruch 7, **dadurch gekennzeichnet, dass** die Verarbeitungsvorrichtung so ausgebildet ist, dass die aufgrund des Fahrwiderstandes dem Fahrzeug entzogene kinetische Energie unter Verwendung eines in der Verarbeitungsvorrichtung abgespeicherten Widerstandsprofils in Abhängigkeit der Signale des Radsensors bestimmbar ist.

9. Fahrzeug (10) mit wenigstens einem zur Fortbewegung vorgesehenem Rad, mit wenigstens einem an dem Rad vorgesehenen ersten Bremselement (2) und mit wenigstens einem am Fahrzeug (10) vorgesehenen zweiten Bremselement (3), wobei das zweite Bremselement (3) zum Bremsen des Fahrzeugs (10) durch eine Betätigungseinrichtung (4) mit dem ersten Bremselement (2) in einen Reibkontakt bringbar ist, wobei ferner eine Vorrichtung (15) zum Bestimmen der Temperatur des ersten Bremselements (2) und/oder des zweiten Bremselements (3) gemäß einem der vorhergehenden Ansprüche vorgesehen ist.

10. Fahrzeug nach Anspruch 9, **dadurch gekennzeichnet, dass** das erste Bremselement als Bremsscheibe (2), Bremstrommel oder als Bremsfläche an einem Rad ausgebildet ist und/oder dass das zweite Bremselement einen Bremsbelag (3) aufweist.

11. Verfahren zum Bestimmen der Temperatur eines an einem Rad eines Fahrzeugs (10) vorgesehenen ersten Bremselements (2) und/oder eines am Fahrzeug (10) vorgesehenen zweiten Bremselements (3), wobei das zweite Bremselement (3) beim Bremsen des Fahrzeugs (10) durch eine Betätigungseinrichtung (4) mit dem zweiten Bremselement (3) in einen Reibkontakt bringbar ist, wobei das Verfahren die folgenden Schritte aufweist:
a) Bestimmen der Gewichtskraft der Zuladung des Fahrzeugs (10),
b) Bestimmen der momentanen Winkelgeschwindigkeit des Rads,
c) Bestimmen des Zustands der Betätigungseinrichtung (4),
wobei wenigstens die Schritte b und c schleifenartig wiederholt ausgeführt werden und wobei zu wenigstens einem Bestimmungszeitpunkt der Schritt des Berechnens der Veränderung der kinetischen Energie des Fahrzeugs (10) zwischen einem vorhergehenden Bestimmungszeitpunkt und dem aktuellen Bestimmungszeitpunkt vorgesehen ist, und wobei ferner die folgenden Schritte vorgesehen sind:
d) Bestimmen der dem ersten Bremselement (2) und/oder dem zweiten Bremselement (3) zugeführten Wärmeenergie aus der Abnahme der kinetischen Energie des Fahrzeugs (10) zwischen dem vorhergehenden Bestimmungszeitpunkt und dem aktuellen Bestimmungszeitpunkt, wenn sich die Betätigungseinrichtung (4) in betätigtem Zustand befindet,
e) Berechnen der Temperatur des ersten Bremselements (2) und/oder des zweiten Bremselements (3) aus der im ersten Bremselement (2) und/oder im zweiten Bremselement (3) gespeicherten Wärmeenergie,
f) Bestimmen, aus der aktuellen Temperatur des ersten Bremselements, einer maximal zulässigen Geschwindigkeit, aus der das Fahrzeug bis zum Stillstand abbremsbar ist, ohne eine vorgegebene Maximaltemperatur des ersten Bremselements zu überschreiten, und Ausgeben der Maximalgeschwindigkeit an einen Fahrer des Fahrzeugs.

12. Verfahren nach Anspruch 11, **dadurch gekennzeichnet, dass** der Schritt des Bestimmens der Ausgangstemperatur des ersten Bremselements (2) und/oder des zweiten Bremselements (3) zum Zeitpunkt der Inbetriebnahme des Fahrzeugs (10) vorgesehen ist.

13. Verfahren nach Anspruch 11 oder Anspruch 12, **dadurch gekennzeichnet, dass** der Schritt des Berechnens der zwischen einem vorhergehenden Bestimmungszeitpunkt und dem aktuellen Bestimmungszeitpunkt aus dem ersten Bremselement (2) und/oder aus dem zweiten Bremselement (3) abgeführten Wärmeenergie aufgrund von Wärmestrahlung, Wärmeleitung und/oder Konvektion abgegebenen Wärmeenergie vorgesehen ist.

14. Verfahren nach einem der Ansprüche 11 bis 13, **dadurch gekennzeichnet, dass** der Schritt des Bestimmens der durch das zweite Bremselement (3) auf das erste Bremselement (2) ausgeübten Kraft vorgesehen ist.

15. Verfahren nach einem der Ansprüche 11 bis 14, **dadurch gekennzeichnet, dass** der Schritt des Bestimmens der potentiellen Energie des Fahrzeugs (10) vorgesehen ist.

16. Verfahren nach Anspruch 15, **dadurch gekennzeichnet, dass** der Schritt des Bestimmens der potentiellen Energie des Fahrzeugs (10) unter Verwendung eines in der Verarbeitungsvorrichtung abgespeicherten Höhenprofils einer vorgegebenen Fahrstrecke des Fahrzeugs (10) in Abhängigkeit der Signale eines zur Messung der Drehung des Rads vorgesehenen Radsensors (13) erfolgt.

17. Verfahren nach einem der Ansprüche 11 bis 16, **dadurch gekennzeichnet, dass** der Schritt des Bestimmens der aufgrund des Fahrwiderstandes dem Fahrzeug entzogenen kinetischen Energie vorgesehen ist.

18. Verfahren nach Anspruch 17, **dadurch gekennzeichnet, dass** der Schritt des Bestimmens der aufgrund des Fahrwiderstandes dem Fahrzeug entzogenen kinetischen Energie des Fahrzeugs in Abhängigkeit der Signale eines zur Messung der Drehung des Rads vorgesehenen Radsensors erfolgt.

## Claims

1. A device for determining or predicting the temperature of a first brake element (2) provided on a wheel of a vehicle (10) and/or a second brake element (3) provided on the vehicle (10), it being possible when braking the vehicle (10) to bring the first brake element (2) into frictional contact with the second brake element (3) by means of an actuating device, said device having the following features:
- at least one wheel sensor (13) by means of which it is possible to determine an angular position at a given moment in time and/or the angular speed of the wheel,
- at least one weight sensor (12) for determining the weight of the load of the vehicle (10),
- a time base device for generating time information,
- an actuation sensor for determining the status of the actuating device,
- a processing device (15) which is designed in such a manner that it is possible to process signals emitted by the wheel sensor (13), the weight sensor (12), the time basis device and the actuation sensor and which has a display unit (17, 18) on which it is possible to output the result of a processing action carried out by the processing device (15),
the processing device (15) further being designed in such a manner that it is possible, at at least one point of determination, to determine a value for the change in temperature of the first brake element (2) and/or the second brake element (3) in relation to a previous point of determination,
to this end, in comparison with at least one value for the kinetic energy of the vehicle (10) at a point prior to the point of determination stored in the processing device (15), it being possible to determine the energy fed to the first brake element (2) and/or the second brake element (3), and the processing device (15) being designed in such a manner that it is possible to determine the thermal energy released by the first brake element (2) and/or the second brake element (3) due to thermal radiation, thermal conductance and/or convection, the processing device (15) being designed in such a manner that it determines from the temperature of the first brake element (2) at any given time a maximum permissible speed from which the vehicle can be braked to a standstill without exceeding a predetermined maximum temperature of the first brake element (2) and it being possible to output the maximum speed to a driver of the vehicle.

2. A device in accordance with claim 1,
**characterised in that**
at least one temperature sensor (16) is provided for determining the initial temperature of the first brake element (2) and/or the second brake element (3) at the time of commissioning of the vehicle (10), the processing device (15) being further designed in such a manner that from the initial temperature it is possible, at at least one point of determination, to determine the value for the temperature of the first brake element (2) and/or the second brake element (3) at a given moment in time.

3. A device in accordance with claim 1 or claim 2,
**characterised in that**
the processing device (15) is designed in such a manner that it is possible to determine the thermal energy released by the first brake element (2) and/or the second brake element (3) due to thermal radiation, thermal conductance and/or convection.

4. A device in accordance with one of the preceding claims,
**characterised in that**
the actuation sensor is designed in such a manner that it is possible to determine the force exerted by the second brake element (3) on the first brake element (2).

5. A device in accordance with one of the preceding claims,
**characterised in that**
a height sensor is provided to determine the potential energy of the vehicle (10).

6. A device in accordance with claim 5,
**characterised in that**
the processing device (15) is designed in such a manner that it is possible to determine the potential energy of the vehicle (10) using a height profile for a predetermined route covered by the vehicle (10) and stored in the processing device dependent on the signals emitted by the wheel sensor (13).

7. A device in accordance with one of the preceding claims,
**characterised in that**
a sensor is provided for determining the kinetic energy taken from the vehicle (10) due to driving resistance and/or further braking devices.

8. A device in accordance with claim 7,
**characterised in that**
the processing device is designed in such a manner that it is possible to determine the kinetic energy taken from the vehicle (10) due to driving resistance using a resistance profile stored in the processing device dependent on the signals emitted by the wheel sensor.

9. A vehicle (10) having at least one wheel provided for the purpose of locomotion, at least one first brake element (2) provided on the wheel and at least one second brake element (3) provided on the vehicle (10), it being possible to bring the second brake element (3) into frictional contact with the first brake element (2) by means of an actuating device in order to brake the vehicle (10), a device (15) for determining the temperature of the first brake device (2) and/or the second brake element (3) in accordance with one of the preceding claims also being provided.

10. A vehicle in accordance with claim 9,
**characterised in that**
the first brake element is deigned as a brake disc, brake drum or braking surface on a wheel and/or that the second brake element has a brake lining (3).

11. A process for determining the temperature of a first brake element (2) provided on a wheel of a vehicle (10) and/or of a second brake element (3) provided on the vehicle, it being possible when braking the vehicle (10) to bring the second brake element (3) into frictional contact with the second brake element (3) by means of an actuating device, said process comprising the following steps:
a) the determination of the weight of the load of the vehicle (10),
b) the determination of the angular speed of the wheel at a given moment in time,
c) the determination of the state of the actuating device (4),
steps b) and c) at least being carried out repeatedly in the manner of a loop, and at at least one point of determination the step involving the calculation of the change in the kinetic energy of the vehicle (10) being provided between a previous point of determination and the current point of determination, and in addition the following steps also being provided:
d) the determination of the thermal energy fed to the first brake element (2) and/or the second brake element (3) from the reduction in the kinetic energy of the vehicle (10) between the previous point of determination and the current point of determination if the actuating device (4) is in actuated condition,
e) the calculation of the temperature of the first brake element (2) and/or of the second brake element (3) from the thermal energy stored in the first brake element (2) and/or the second brake element (3),
f) the determination from the current temperature of the first brake element (2) of a maximum permissible speed from which it is possible to brake the vehicle to a standstill without exceeding a predetermined maximum temperature of the first brake element, and the outputting of the maximum speed to a driver of the vehicle.

12. A process in accordance with claim 11,
**characterised in that**
the step involving the determination of the initial temperature of the first brake element (2) and/or the second brake element (3) is scheduled at the time of commissioning of the vehicle (10).

13. A process in accordance with claim 11 or claim 12,
**characterised in that**
the step involving the calculation of the thermal energy dissipated by the first brake element (2) and/or the second brake element (3) between a previous point of determination and the current point of determination due to thermal energy released due to thermal radiation, thermal conductance and/or convection is provided.

14. A process in accordance with one of claims 11 to 13,
**characterised in that**
the step involving the determination of the force exerted by the second brake element (3) on the first brake element (2) is provided.

15. A process in accordance with one of claims 11 to 14,
**characterised in that**
the step involving the determination of the potential energy of the vehicle (10) is provided.

16. A process in accordance with claim 15,
**characterised in that**
the step involving the determination of the potential energy of the vehicle (10) using a height profile for a predetermined route covered by the vehicle (10) and stored in the processing device takes place dependent on the signals emitted by a wheel sensor (13) provided to measure the rotation of the wheel.

17. A process in accordance with one of claims 11 to 16,
**characterised in that**
the step involving the determination of the kinetic energy taken from the vehicle due to driving resistance is provided.

18. A process in accordance with claim 17,
**characterised in that**
the step involving the determination of the kinetic energy taken from the vehicle (10) due to driving resistance is carried out dependent on the signals emitted by a wheel sensor provided to measure the rotation of the wheel.

## Revendications

1. Installation de détermination et de prédiction de la température d'un premier élément de frein (2) prévu sur une roue d'un véhicule (10) et/ou d'un deuxième élément de frein (3) prévu sur le véhicule (10), le premier élément de frein (2) pouvant, quand le véhicule (10) freine, être mis en contact de frottement avec le deuxième élément de frein (3) par un dispositif d'actionnement, l'installation ayant les caractéristiques suivantes :
- au moins un capteur de roue (13) qui permet de déterminer une position angulaire instantanée et/ou la vitesse angulaire de la roue,
- au moins un capteur de poids (12) pour déterminer le poids de la charge utile du véhicule (10),
- un dispositif de base de temps pour produire des informations temporelles,
- un capteur d'actionnement pour déterminer l'état du dispositif d'actionnement,
- un dispositif de traitement (15) conçu de telle manière qu'il est possible de traiter des signaux du capteur de roue (13), du capteur de poids (12), du dispositif de base de temps et du capteur d'actionnement et équipé d'une unité d'affichage (17, 18) qui permet de fournir le résultat d'un traitement réalisé par le dispositif de traitement (15),
le dispositif de traitement (15) étant en outre conçu de telle manière qu'il est possible de déterminer, à au moins un instant de détermination, une valeur qui indique le changement de température du premier élément de frein (2) et/ou du deuxième élément de frein (3) par rapport à un instant précédent de détermination,
à cet effet l'énergie apportée au premier élément de frein (2) et/ou au deuxième élément de frein (3) peut être déterminée par rapport à au moins une valeur - mémorisée dans le dispositif de traitement (15) - de l'énergie cinétique du véhicule (10) à un instant qui précède l'instant de détermination et le dispositif de traitement (15) est conçu de telle manière qu'il soit possible de déterminer l'énergie calorifique cédée par le premier élément de frein (2) et/ou par le deuxième élément de frein (3) par rayonnement calorifique, par conduction calorifique et/ou par convection,
le dispositif de traitement (15) est conçu de telle manière qu'il établit à partir de la température instantanée du premier élément de frein (2) une vitesse maximale autorisée pour pouvoir freiner le véhicule jusqu'à ce qu'il s'arrête sans que le premier élément de frein (2) dépasse une température maximale prédéfinie et
la vitesse maximale peut être indiquée à un conducteur du véhicule.

2. Installation selon la revendication 1, **caractérisée en ce qu'**il est prévu au moins un capteur de température (16) pour déterminer la température initiale du premier élément de frein (2) et/ou du deuxième élément de frein (3) à l'instant où le véhicule (10) est mis en fonctionnement, le dispositif de traitement (15) étant en outre conçu de telle manière que la valeur concernant la température instantanée du premier élément de frein (2) et/ou du deuxième élément de frein (3) peut être déterminée à partir de la température initiale à au moins un instant de détermination.

3. Installation selon la revendication 1 ou 2, **caractérisée en ce que** le dispositif de traitement (15) est conçu de telle manière qu'il est possible de déterminer l'énergie calorifique cédée par le premier élément de frein (2) et/ou par le deuxième élément de frein (3) par rayonnement calorifique, par conduction calorifique et/ou par convection.

4. Installation selon l'une des revendications précédentes, **caractérisée en ce que** le capteur d'actionnement est conçu de telle manière qu'il est possible de déterminer la force exercée par le deuxième élément de frein (3) sur le premier élément de frein (2).

5. Installation selon l'une des revendications précédentes, **caractérisée en ce qu'**un capteur de niveau est prévu pour déterminer l'énergie potentielle du véhicule (10).

6. Installation selon la revendication 5, **caractérisée en ce que** le dispositif de traitement (15) est conçu de telle manière qu'en fonction des signaux du capteur de roue (13) l'énergie potentielle du véhicule (10) peut être déterminée en utilisant un profil de niveau - d'un trajet prédéfini du véhicule (10) - mémorisé dans le dispositif de traitement.

7. Installation selon l'une des revendications précédentes, **caractérisé en ce qu'**un capteur est prévu pour déterminer l'énergie cinétique soustraite du véhicule (10) en raison de la résistance à l'avancement et/ou d'autres dispositifs de freinage.

8. Installation selon la revendication 7, **caractérisée en ce que** le dispositif de traitement est conçu de telle manière que l'énergie cinétique soustraite du véhicule en raison de la résistance à l'avancement peut être déterminée en fonction des signaux du capteur de roue en utilisant un profil de résistance mémorisé dans le dispositif de traitement.

9. Véhicule (10) équipé d'au moins une roue prévue pour le déplacement, d'au moins un premier élément de frein (2) prévu sur la roue et d'au moins un deuxième élément de frein (3) prévu sur le véhicule (10), le deuxième élément de frein (3) pouvant être mis en contact de frottement par un dispositif d'actionnement (4) avec le premier élément de frein (3) pour freiner le véhicule (10), un dispositif (15) étant en outre prévu pour déterminer la température du premier élément de frein (2) et/ou du deuxième élément de frein (3) conformément à l'une des revendications précédentes.

10. Véhicule selon la revendication 9, **caractérisé en ce que** le premier élément de frein consiste en un disque de frein (2), un tambour de frein ou une surface de frein sur une roue et/ou **en ce que** le deuxième élément de frein comporte une garniture de frein (3).

11. Procédé pour déterminer la température d'un premier élément de frein (2) prévu sur une roue d'un véhicule (10) et/ou d'un deuxième élément de frein (3) prévu sur le véhicule (10), le premier élément de frein (2) pouvant, quand le véhicule (10) freine, être mis en contact de frottement avec le deuxième élément de frein (3) par un dispositif d'actionnement, le procédé ayant les stades suivants :
a) déterminer le poids de la charge utile du véhicule (10),
b) déterminer la vitesse angulaire instantanée de la roue,
c) déterminer l'état du dispositif d'actionnement (4) en réitérant en boucle au moins les stades b et c en prévoyant à au moins un instant de détermination le stade qui consiste à calculer la modification de l'énergie cinétique du véhicule (10) entre un instant précédent de détermination et l'instant présent de détermination et en prévoyant en outre les stades suivants :
d) déterminer l'énergie thermique apportée au premier élément de frein (2) et/ou au deuxième élément de frein (3) à partir de la diminution de l'énergie cinétique entre l'instant précédent de détermination et l'instant présent de détermination quand le dispositif d'actionnement (4) est en l'état actionné,
e) calculer la température du premier élément de frein (2) et/ou du deuxième élément de frein (3) à partir de l'énergie calorifique emmagasinée dans le premier élément de frein (2) et/ou le deuxième élément de frein (3),
f) déterminer, à partir de la température présente du premier élément de frein une vitesse maximale autorisée pour pouvoir freiner le véhicule jusqu'à ce qu'il s'arrête sans que le premier élément de frein dépasse une température maximale prédéfinie et indiquer la vitesse maximale à un conducteur du véhicule.

12. Procédé selon la revendication 11, **caractérisé en ce que** le stade qui consiste à déterminer la température initiale du premier élément de frein (2) et/ou du deuxième élément de frein (3) est prévue au moment où le véhicule est mis en fonctionnement.

13. Procédé selon la revendication 11 ou 12, **caractérisé en ce qu'**on prévoit le stade qui consiste à calculer l'énergie calorifique cédée par rayonnement calorifique, par conduction calorifique et/ou par convection par le premier élément de frein (2) et/ou le deuxième élément de frein (3) entre un instant précédent de détermination et l'instant présent de détermination.

14. Procédé selon l'une des revendications 11 à 13, **caractérisé en ce qu'**on prévoit le stade qui consiste à déterminer la force exercée par le deuxième élément de frein (3) sur le premier élément de frein (2).

15. Procédé selon l'une des revendications 11 à 14, **caractérisé en ce qu'**on prévoit le stade qui consiste à déterminer l'énergie potentielle du véhicule (10).

16. Procédé selon la revendication 15, **caractérisé en ce que** le stade qui consiste à déterminer l'énergie potentielle du véhicule (10) s'effectue en utilisant un profil de niveau - enregistré dans le dispositif de traitement - d'un trajet prédéfini du véhicule (10) en fonction des signaux d'un capteur de roue (3) prévu pour mesurer la rotation de la roue.

17. Procédé selon l'une des revendications 11 à 16, **caractérisé en ce qu'**on prévoit le stade qui consiste à déterminer l'énergie cinétique soustraite du véhicule à cause de la résistance à l'avancement.

18. Procédé selon la revendication 17, **caractérisé en ce que** le stade qui consiste à déterminer l'énergie cinétique soustraite du véhicule en raison de la résistance à l'avancement est effectuée en fonction des signaux d'un capteur de roue prévu pour mesurer la rotation de la roue.
